# EUROPÄISCHE PATENTSCHRIFT

(11) **EP 1 971 635 B1**
(45) Veröffentlichungstag und Bekanntmachung des Hinweises auf die Patenterteilung: **28.03.2012**
(21) Anmeldenummer: 07702668.0
(22) Anmeldetag: 10.01.2007
(51) Int. Cl.: C08J 5/22, H01M 8/02, H01M 8/10

(54) **PROTONENLEITENDE POLYMERMEMBRAN**
PROTON-CONDUCTING POLYMER MEMBRANE
MEMBRANE POLYMERIQUE CONDUCTRICE DE PROTONS

(30) Priorität: 12.01.2006 DE 102006001770
(43) Veröffentlichungstag der Anmeldung: 24.09.2008
(73) Patentinhaber: Helmholtz-Zentrum Geesthacht Zentrum für Material- und Küstenforschung GmbH, 21502 Geesthacht (DE); National Autonomous University of Mexico (Universidad Nacional Autónoma de México (UNAM)), 04510, Apartado Postal 70-360 (MX)
(72) Erfinder: FRITSCH, Detlev, 21465 Reinbek (DE); VETTER, Serge, 89075 Ulm (DE); NUNES, Suzana, 21502 Geesthacht (DE); SANSORES, Luis E., Mexico, DF 01020 N 1428 (MX); ZOLOTUKHIN, Mikhail, Mexico, DF 04350 N 2014 (MX)
(74) Vertreter: Grebner, Christian Georg Rudolf
(86) Internationale Anmeldenummer: PCT/EP2007/000166
(87) Internationale Veröffentlichungsnummer: WO 2007/082660

(56) Entgegenhaltungen:
- WO-A-2005/059007
- US-A1- 2004 121 211
- US-A1- 2005 116 206
- US-A1- 2005 124 769
- US-A1- 2005 186 460
- US-A1- 2005 227 138
- US-A1- 2005 287 410

## Beschreibung

Die Erfindung betrifft eine Polymerelektrolytmembran, insbesondere einer Brennstoffzelle, aus einem Membranpolymer sowie die Verwendung einer Polymerelektrolytmembran.

Brennstoffzellen gelten als zukunftsweisende emissionsarme Alternative zu konventionellen Energiegewinnungsverfahren. Für mobile Anwendungen ist die Polymerelektrolyt-Membran-Brennstoffzelle (PEM) von besonderem Interesse. Eine protonenleitende Polymermembran ist hierbei die zentrale Komponente in diesem Brennstoffzellentyp.

Es gibt zahlreiche Untersuchungen zur Verwendung anderer Polymere als Membranmaterialien in Brennstoffzellen. Bei diesen Polymeren handelt es sich allerdings fast ausschließlich um sulfonierte Materialien, deren Protonenleitfähigkeit auf Sulfonsäure-Gruppen zurückzuführen ist.

Die Polymer-Elektrolyt-Membran-Brennstoffzellen (PEM-Brennstoffzellen) bestehen aus zwei Elektroden, die durch eine protonenleitende Membran (Polymer Electrolyte Membran oder Protone Exchange Membran) voneinander getrennt sind. Die Elektroden bestehen z.B. aus Kohlenstoffmatten, die mit Platin bedampft und über einen äußeren Stromkreis miteinander verbunden sind. Damit eine Umsetzung von Wasserstoff und Sauerstoff zu Wasser erfolgen kann, muss die protonenleitende Membran befeuchtet werden. Der Anode wird kontinuierlich der Brennstoff Wasserstoff zugeführt. Die Kathode wird ständig mit Sauerstoff versorgt. Zwei Arten vom PEM-Brennstoffzellen sind in der Entwicklung: Niedertemperaturzellen (bis etwa 90°C) und Hochtemperaturzellen (bis etwa 180°C).

Die Niedertemperaturzelle wurde in den 60er-Jahren entwickelt. Damals diente eine sulfonierte Polystrol-Membran als Elektrolyt. Seit 1969 wird die von DuPont entwickelte Nafion^{®}-Membran in die PEM-Brennstoffzellen eingebaut. Niedertemperaturzellen reagieren empfindlich auf Kohlenmonoxid (CO). Dieses Gas kann den Anodenkatalysator blockieren, was zu einem Leistungsabfall führt. Die Membran muss befeuchtet werden, damit Protonen geleitet werden können.

Hochtemperaturzellen reagieren gegenüber CO und anderen Verunreinigungen unempfindlich. Höhere Arbeitstemperaturen in der Zelle sind für die Hausenergie interessant, da sie eine effektivere Ausnutzung der entstehenden Wärme ermöglichen. Da die Membran ohne Wasser Protonen leitet, muss sie nicht befeuchtet werden.

In den PEM-Brennstoffzellen (Polymer-Elektrolyt-Membran) ist der Elektrolyt, der aus einer ionenleitfähigen Polymermembran besteht, die zentrale Zellkomponente. Die Anforderungen an diese Membran sind vielfältig und komplex: Elektrochemische und mechanische Stabilität unter Zellbedingungen, Verarbeitbarkeit, hohe lonenleitfähigkeit und eine geringe Permeation der Reaktanden (Wasserstoff, Methanol, Sauerstoff) müssen kombiniert werden. Eine Polymerelektrolytmembran, die allen diesen gestellten Anforderungen gerecht wird und zudem auch preisgünstig verfügbar ist, gibt es zurzeit nicht.

Vor ca. 30 Jahren wurden mit Sulfonsäuregruppen ionisch funktionalisierte Copolymere von Tetrafluorethylen für die Chlor-Alkali-Elektroyse entwickelt. Diese sind immer noch die aktuellen Standardpolyelektrolyte für Brennstoffzellen. Der bekannteste und meist angewandte Vertreter dieser Polymere ist das von DuPont entwickelte und produzierte Nafion^{®}. Das Perfluoralkylensulfonsäurepolymer ist sulfoniert und demgemäß weist es eine ausgezeichnete Protonenleitfähigkeit auf. Die mechanische und elektrochemische Stabilität bedingt, dass Nafion^{®} als Zellmembran geeignet ist.

Die Membranherstellung ist allerdings schwierig und teuer. Die Protonenleitung ist in Nafion^{®} mit einer ungewollten Wasserdiffusion gekoppelt. Wird Nafion^{®} in Wasser gequollen, so wird eine hohe lonenleitfähigkeit beobachtet. Daher sind Anwendungen über 100 °C nicht möglich. Höhere Temperaturen sind aber erstrebenswert aufgrund der Empfindlichkeit der eingesetzten Platinkatalysatoren gegenüber Kohlenstoffmonoxid (CO) bei Temperaturen unter 100 °C. In praktischen Anwendungen ist der Wasserstoff als Brenngas mit Spuren von CO verunreinigt. Dieses Kohlenstoffmonoxid (CO) stellt ein großes Problem für Niedrigtemperaturbrennstoffzellen dar, da es an der Platinoberfläche adsorbiert wird und so den Katalysator vergiftet.

Im Zuge der Suche nach höheren Wirkungsgraden von Primärenergieträgern haben protonenleitende Polymermembranen (Polymer-Elektrolyt-Membran PEM) in den letzten 10 Jahren eine zunehmende Bedeutung erlangt. Neben dem als Standard anzusehenden Polymer Nafion^{®} und Fluorpolymeren ähnlicher Struktur (Aciplex^{®}, Flemion^{®}, Hyflon^{®}lon) wurde eine Vielzahl von Polymeren als Protonenleiter untersucht (W. Vielstich, A. Lamm, H. A. Gasteiger, Editors. Handbook of Fuel Cells. John Wiley & Sons, New York, 2003 und Hickner, M. A., H. Ghassemi, et al. (2004). "Alternative polymer Systems for proton exchange membranes (PEMs)." Chemical Reviews 104(10): 4587-4611).

Für die beiden Hauptanwendungen von PEM mit Wasserstoff bzw. Methanol (DMFC) als Energiequelle (Brennstoff) ergeben sich folgende Anforderungen an eine Membran (Hickner, M. A., H. Ghassemi, et al. (2004) a.a.O.): hohe Protonenleitfähigkeit, niedrige elektrische Leitfähigkeit, niedrige Permeabilität für Brennstoff und Sauerstoff, niedriger diffusiver Wassertransport bzw. Elektroosmose, hohe oxidative und hydrolytische Stabilität, gute mechanische Eigenschaften im trockenen und wichtiger im hydratisierten Zustand, niedrige Kosten und Verarbeitbarkeit zu Membran-Elektrodeneinheiten (MEA).

Eine Vielzahl von Polymeren wurde für PEMs bisher vorgeschlagen. In der großen Mehrzahl aller Beispiele wurde durch Einführung von Sulfonsäuregruppen entweder nachträglich durch eine geeignete Sulfonierungsmethode oder schon bei der Synthese durch Einsatz von sulfonierten Monomeren die Protonentransportfähigkeit erreicht.

So wurden aliphatische Polymere basierend auf Polystyrenen oder Polyvinylalkohol vorgeschlagen, wobei durch teilweise Fluorierung die Beständigkeit unter PEM Bedingungen erhöht wurde. Aus der Klasse der aromatischen Polymere wurde eine wesentlich größere Zahl an sulfonierten Polymeren untersucht. So wurden Polysulfone, Polyethersulfone, Polyetheretherketone, Polyetherketonketone, Polyimide, Poly(4-phenoxybenzoyl-1,4-phenylene), Polyether (besonders mit Tetraphenylphenyleneinheiten) und Polybenzimidazole, -thiazole, -oxazole jeweils in sulfonierter Form beschrieben (Hickner, M. A., H. Ghassemi, et al. (2004) a.a.O. und Smitha, B., S. Sridhar, et al. (2005). "Solid polymer electrolyte membranes for fuel cell applications - a review." Journal of Membrane Science 259(1-2): 10-26).

Für die Protonenleitung bei Temperaturen oberhalb von 100°C sind sulfonierte oder carboxylierte Polymere weniger geeignet, da diese Gruppen bei hohen Temperaturen Wasser verlieren und damit die Leitung für Protonen wesentlich verringert wird. Phosphoniumgruppen sind unter diesen Bedingungen wesentlich stabiler und wurden für die Anwendung bei hohen Temperaturen favorisiert (Stone, C, T. S. Daynard, et al. (2000). "Phosphonic acid functionalized proton exchange membranes for PEM fuel cells." Journal of New Materials for Electrochemical Systems 3(1): 43-50; Jakoby, K., K. V. Peinemann, et al. (2003). "Palladium-catalyzed phosphonation of polyphenylsulfone." Macromolecular Chemistry And Physics 204(1): 61-67; Lafitte, B. and P. Jannasch (2005). "Phosphonation of polysulfones via lithiation and reaction with chlorophosphonic acid esters." Journal of Polymer Science Part A-Polymer Chemistry 43(2): 273-286; Yamada, M. and I. Honma (2005). "Anhydrous proton conducting polymer electrolytes based on poly(vinylphosphonic acid)-heterocycle composite material." Polymer 46(9): 2986-2992 und DE 101 48 131 A1 mit weiteren Fundstellen).

Vollständig fluorierte, sulfonierte Polymere wie Nafion^{®} und ähnliche bieten eine sehr hohe Stabilität sowohl gegenüber oxidativem Angriff als auch hydrolytischer Zersetzung. Jedoch wird unter Einsatzbedingungen die Entwicklung von toxischen Fluoridionen in Form von HF (Flußsäure) beobachtet, die hauptsächlich durch den Abbau an freien Endgruppen des Polymeren entstehen (Curtin, D. E., R. D. Lousenberg, et al. (2004). "Advanced materials for improved PEMFC Performance and life." Journal of Power Sources 131 (1-2): 41-48). Durch Verteilung der Sulfonsäuregruppen im unverträglichen, fluorierten Polymer entsteht bei dieser Polymerklasse eine Feinstruktur mit der Bildung von relativ großen, wassergefüllten Clustern der Sulfonsäuregruppen. Dadurch quellen für Anwendungen als DMFC-Membran durch die wässrige Methanollösung die Membranen sehr stark und zeigen einen zu hohen Wasser- und Methanoltransport zur Kathodenseite.

Aliphatische, sulfonierte Polymere sind leichter oxidativ anzugreifen als aromatische Polymere. Die Fluorierung an den gefährdeten Stellen verbessert zwar die Stabilität, jedoch ist das Auftreten von Fluoridionen oder Fluorradikalen als toxisches Abbauprodukt möglich. Bei aromatischen Polymeren werden in der Regel die erforderlichen guten mechanischen Eigenschaften durch flexible Ethergruppen in Kombination mit starren Sulfoxid- oder Ketongruppen erreicht. Als direkte Folge ist die Verteilung der protonenleitenden Sulfonsäure-gruppen über die Polymerkette uneinheitlich und kann zu einem schlechten Protonentransport im wenig gequollenen Zustand führen (Paddison, S. J. (2003). "Proton conduction mechanisms at low degrees of hydration in sulfonic acid-based polymer electrolyte membranes." Annual Review of Materials Research 33: 289-319). Im stark gequollenen Zustand verbessert sich der Protonentransport zwar, jedoch stellen sich die bei Nafion^{®} beschriebenen Nachteile wie hoher Wassertransport ein und die mechanische Stabilität verringert sich stark.

Li et al. beschreiben in einem Artikel (Li, Q. F., R. H. He, et al. (2003). "Approaches and recent development of polymer electrolyte membranes for fuel cells operating above 100 degrees C." Chemistry of Materials 15(26): 4896-4915) Lösungen für Brennstofzellenmembranen bei Betrieb oberhalb 100°C. Besonders mit Phosphorsäure behandelte Polybenzimidazolmembranen zeigen eine gute Stabilität. Jedoch wird für die Herstellung dieser Membranen als Lösemittel z.B. Trifluoressigsäure eingesetzt (US 5,716,727). Diese Säure besitzt bei Raumtemperatur einen hohen Dampfdruck, ist gesundheitsschädlich (R20) und wassergefährdend (R52/53). Alternativ sind diese Membranen auch herstellbar aus Dimethylacetamid mit 2% LiCl und anschließender Dopierung mit Phosophorsäure (US 5,525,436). In beiden Fällen jedoch ist die Phosphorsäure nicht völlig in der Membran gebunden und kann im Betrieb ausbluten. Durch die Diffusion zur katalytischen Schicht wird in der Regel die katalytische Reaktion negativ beeinträchtigt und der Katalysator geschädigt.

Ferner ist in US-A-2004/0121211 eine Polymerelektrolytbrennstoffzelle beschrieben, die eine Polymerelektrolytmembran umfasst, die zwischen den Katalysatorschichten von zwei Elektroden angeordnet ist. Die Elektrolytmembran umfasst ein sulfoniertes Polyarylen, das Sulfonsäure-Seitenkettengruppen enthält. Dabei enthält das sulfonierte Polyarylen in einer Molekülstruktur kein Fluor oder Fluor nur als Elektronen abziehende Gruppe. Die Sulfonsäuregruppe ist nicht in einen aromatischen Ring neben der Elektronen abziehenden Gruppe eingeführt, sondern sie ist nur in einen aromatischen Ring eingeführt, welcher danebenliegt.

Außerdem ist in US-A-2005/0287410 eine Polymerelektrolytmembran beschrieben, wobei die Polymerelektrolytmembran eine oder mehrere Polymere aufweist, die alle einen aromatischen Ring in ihrer Hauptkette aufweisen, wovon mindestens ein Polymer eine aliphatische Kette in ihrer Hauptkette aufweist und wovon mindestens ein Polymer ein Polymerelektrolyt ist.

Ausgehend von diesem Stand der Technik ist es Aufgabe der vorliegenden Erfindung, eine protonenleitfähige Membran bereitzustellen, die eine hohe oxidative und hydrolytische Beständigkeit aufweist, wobei eine gleichmäßige Anordnung der protonenleitenden Gruppen im Membranvolumen bzw. im dreidimensionalen Raum ausgebildet sein soll.

Gelöst wird diese Aufgabe durch eine Polymerelektrolytmembran, insbesondere einer Brennstoffzelle, die dadurch weitergebildet ist, dass das Membranpolymer, insbesondere als Homopolymer, aus aromatischen Polyarylenen hergestellt ist, wobei an die Polyarylengruppen protonenleitende funktionelle Gruppen gebunden sind, wobei die aromatischen Polyarylene als Monomereinheit eine der folgenden Strukturen aufweisen: 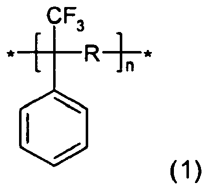 oder 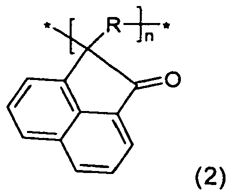 oder 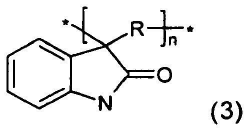 oder 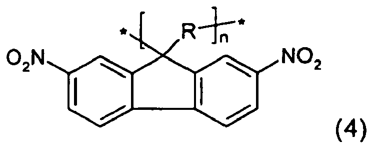 und wobei die Reste R nach Art der Strukturen 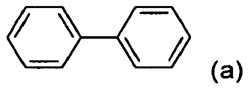 oder 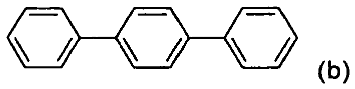 oder 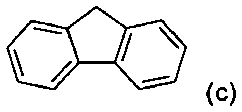 oder 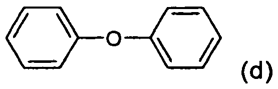 oder 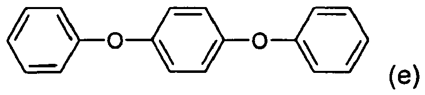 oder 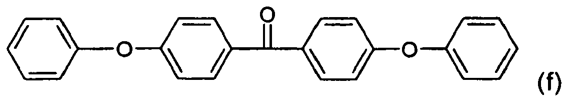 aufgebaut sind.

Durch die Modifikation der aromatischen Polyarylene und eine gleichmäßige oder homogene Verteilung bzw. Anordnung der funktionellen protonenleitenden Gruppen des Polymers, insbesondere des Homopolymers, im dreidimensionalen Raum wird eine hohe hydrolytische und oxidative Stabilität des Membranpolymers erreicht, wobei durch eine gleichmäßige Verteilung der protonenleitenden Gruppen, beispielsweise Sulfonsäuregruppen, gleichzeitig die Protonenleitfähigkeit des Membranpolymers gesteigert wird.

Hierbei sind als funktionelle protonenleitende Gruppen, beispielsweise Sulfonsäuregruppen, innerhalb einer oder mehrerer Monomereinheiten, vorzugsweise eines Homopolymers, im Wesentlichen homogen verteilt, wodurch auch in der dreidimensionalen Anordnung der Polymerketten des Membranpolymers eine gleichmäßige Verteilung der funktionellen Gruppen ausgebildet ist bzw. erreicht wird. Aufgrund der im Wesentlichen gleichförmigen Anordnung der funktionellen Gruppen im Raum wird neben einer erhöhten Leitfähigkeit des erfindungsgemäßen Polymers auch eine gute mechanische Stabilität des Membrankörpers erreicht.

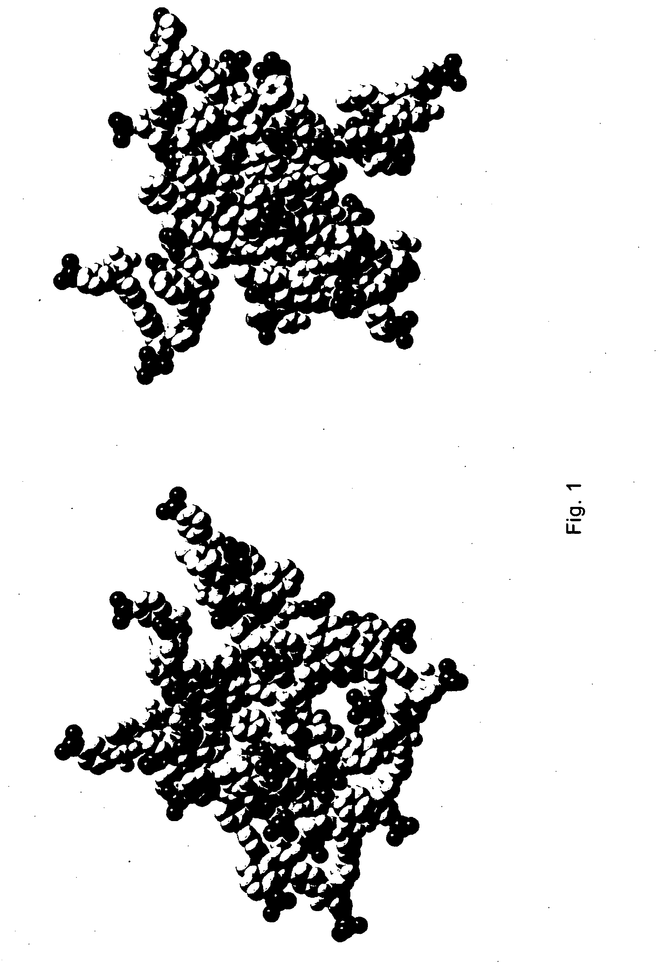

Beispielsweise wird dadurch eine Membran mit Sulfonsäuregruppen als funktionelle protonenleitende Gruppen bereitgestellt, die gemäß der folgenden Struktur 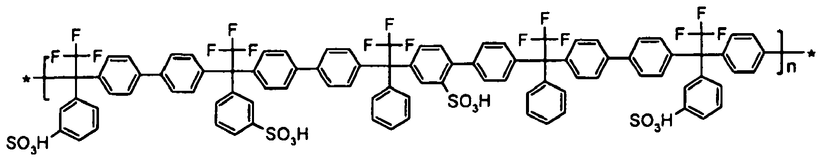 aus sulfonierten Polymeren mit Polyarylenen ausgebildet ist und bei der die 5 Monomereinheiten zu 80 % statistisch sulfoniert sind. In Fig. 1 ist eine dreidimensionale Darstellung des sulfonierten Polymers gezeigt. Hierbei wird die räumliche Anordnung der protonenleitenden Sulfonsäuregruppen im dreidimensionalen Raum deutlich. Dargestellt sind drei Polymerketten mit je 11 Monomereinheiten und einem Sulfonierungsgrad (DS) von 0.8. Die Sulfonsäuregruppen als funktionelle Gruppen sind in den Bildern schwarz dargestellt. Das rechte Bild zeigt das Polymer mit einer Rotation der y-Achse um 90° gegenüber dem linken Bild.

Dazu ist überdies vorgesehen, dass die funktionellen protonenleitenden Gruppen räumlich, d.h. im Polymer- bzw. Membranvolumen, d.h. im dreidimensionalen Raum im Wesentlichen gleichmäßig verteilt sind, wodurch eine gleichmäßige Quellung der Membran bzw. des Membranpolymers erzielt wird. Die gleichmäßige bzw. im Wesentlichen homogene Verteilung der Sulfonsäuregruppen im Membranpolymer ist derart, dass die hydrolytische und oxidative Stabilität und gleichzeitig eine verbesserte bzw. erhöhte Protonenleitfähigkeit erreicht werden.

In einer bevorzugten Weiterbildung ist außerdem vorgesehen, dass die protonenleitenden funktionellen Gruppen als Phosphonsäuregruppen oder Sulfonsäuregruppen ausgebildet sind. Weiterhin kann das Membranpolymer auch Phosphongruppen aufweisen, so dass durch die gleichmäßige räumliche Verteilung der ionischen, protonenleitenden Sulfonsäuregruppen sowie durch den Einbau der Phosphongruppen neben einer Lebensdauerverlängerung der Membran auch eine Langzeitstabilität der Brennstoffzelle auch bei Temperaturen oberhalb von 100°C erreicht werden.

Durch die Herstellung von Polymeren auf der Basis von aromatischen Polyarylenen in Anwesenheit von, insbesondere starken, sauren Katalysatoren, wie z.B. Trifluormethansulfonsäure, sind Polymere für die erfindungsgemäße Membran zugänglich, die ohne Ether-, Keto- oder Sulfongruppen zu mechanisch stabilen und oxidativ bzw. hydrolytisch beständigen Filmen verarbeitet werden.

Durch eine vorbestimmte Auswahl der Monomere ist es auch möglich, diese funktionellen Gruppen (Ether-, Keto- oder Sulfongruppen) mit in das Polymer einzubauen. Durch Sulfonierung, Carboxylierung bzw. Phosphonierung dieser Polymere entstehen protonenleitende Materialien bzw. Membranen, die als PEM eingesetzt werden können. Zusätzlich sind nach dieser Polymerisationsmethode bei Verwendung von sulfonierten bzw. phosphonierten Monomeren protonenleitende Polymere bzw. die erfindungsgemäße Polymerelektrolytmembran auch direkt entsprechend Schema 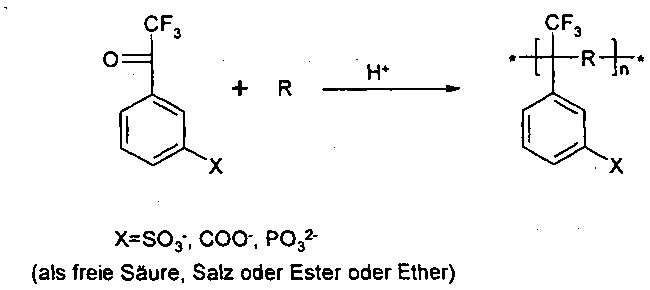 erhältlich bzw. zugänglich. Hierbei werden ionische Monomere unmittelbar zu protonenleitenden Polymeren polymerisiert. Darüber hinaus können auch geschützte sulfonierte oder phosphonierte Polymere durch entsprechende Behandlung auch in Form des endgültigen Membranfilmes durch z.B. Behandlung mit starker Säure in die entsprechende freie, protonenleitende Form überführt werden. Im Rahmen der Erfindung ist es weiterhin denkbar, dass weitere aromatische Polyarylene gemäß dem voranstehenden Schema synthetisiert bzw. hergestellt werden.

Durch die Methode der Polymerisation unter Verwendung von starken Säuren ist eine Vielzahl verschiedener Polymere auf der Basis von aromatischen Polyarylenen herstellbar, die sich dadurch auszeichnen, dass sich die protonenleitfähigen Gruppen räumlich eng verteilt anordnen. Dies ist von besonderem Vorteil beim Einsatz als Brennstoffzellenmembran bei Temperaturen oberhalb 100°C sowohl bei auf Sulfonsäuregruppen basierenden Polymeren als auch besonders bei phosphonierten Polymeren, wobei die Betriebsweise einer Brennstoffzelle oberhalb 100°C eine bessere Kohlenmonoxidtoleranz des Katalysators, bessere Wirkung des Katalysators (bessere Reaktionskinetik), und ein verbessertes, einfaches Wärmeenergiemanagement des Stacks aufweist.

Ein weiterer Effekt dieser besonderen Anordnung der ionischen Gruppen betrifft die Quellung bei Anwesenheit von Wasser (auch als Oxidationsprodukt von H₂ bzw. Methanol oder Ethanol) und Alkoholen als flüssiger Brennstoff. Durch die optimale Verteilung tritt eine gleichmäßigere Verteilung der gequollenen Bereiche auf und damit wird eine insgesamt bessere mechanische Stabilität im gequollenen Zustand erreicht.

Im Folgenden wird die Erfindung anhand von durchgeführten Versuchen mit verschiedenen Polymeren, die für die Durchführung der Vergleichsweise unterschiedlich modifiziert worden sind, erläutert. Die untersuchten Polymere hatten hierfür die folgende Zusammensetzung:

| | Monomereinheit | Rest R |
|---|---|---|
| Homopolymer (HP) | 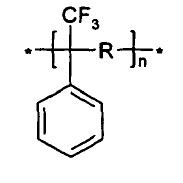 | 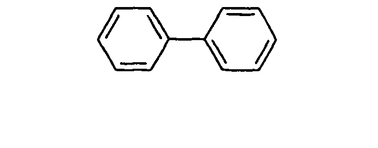 |
| Copolymer (CP) | 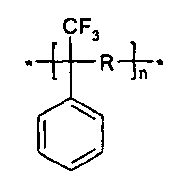 | 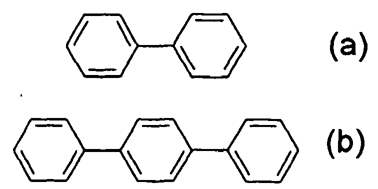 |

Homopolymere sind durch HP, Copolymere durch CP bezeichnet.

Die Copolymere weisen dabei die gleichen Mengen Reste (a) und (b) auf.

Für die Bestimmung der Materialeigenschaften der hergestellten Polymere wurden folgende Methoden und Geräte verwendet:

Die Elementaranalysen wurden mit einem Carlo Erba CHNS-0 Analysator Modell EA 1110 und Modell 1108 erhalten. Die thermogravimetrische Analyse (TGA) wurde mit einer NETZSCH TG 209 bei einer Heizrate von 10°C/min unter Argonschutzgas durchgeführt. Infrarot Spektren (IR) wurden mit einem FT-IR Spektrometer Equinox 55 der Firma Bruker in Form eines dünnen Filmes gemessen. ¹³C-und ¹H-NMR Spektren wurden mit einem Bruker AC 259 (250 MHz) aufgenommen.

Für die Gelpermeationschromatographie (GPC) zur Bestimmung der Molmassen wurde ein Satz von 3 Säulen verwendet (GRAM analytisch von Polymer Standards Service mit 10 µm Partikeln: Vorsäule 8*50 mm, Gram 100 und Gram 1000, beide 8*300 mm). Das GPC System bestand aus Entgaser, Knauer analytischer HPLC-Pumpe und einem Knauer Differentialrefraktometer/Viscometer Doppeldetektor. Für die Auswertung wurde PSS WINGPC Software mit der universellen Kalibriermethode verwendet. Säulenofen und Detektor wurden bei 50°C und einem Fluß von 1 ml/min betrieben. Als Laufmittel wurde Dimethylacetamid mit 0.05M LiCl verwendet, um die Wechselwirkung des sulfonierten Polymers mit dem Säulenmaterial zu minimieren. Es wurde 20 µl Proben von einer Konzentration von 2-5 g/l aufgegeben.

### Beispiel 1: Sulfonierte Polymere

Polymere der Grundstruktur HP und CP wurden sulfoniert. Dazu wurden jeweils 2g Polymer zu einer 5%-igen Lösung in 1,2-Dichlorethan gelöst und mit Trimethylsilylchlorsulfonsäure unter Ar bei Rückfluss erhitzt. Die Reaktionsbedingungen sind in Tab. 1 zusammengefasst.

**Tabelle 1: Reaktionsbedingungen und Sulfonierungsgrad.**

| | Verhältnis Sulfonierungsreagens / Polymer [mol/mol] | Zeit [h] | C [%] | H [%] | F [%] | S [%] | S/C | Sulfonierungsgrad DS [%] |
|---|---|---|---|---|---|---|---|---|
| HP-S1 | 1.6 | 24 | 67.9 | 4.13 | 15.6 | 2.65 | 0.039 | 28 |
| | | | 67.8 | 4.07 | 15.6 | 2.81 | 0.041 | |
| HP-S2 | 1.6 | 48 | 66.7 | 4.22 | 14.6 | 4.23 | 0.063 | 45 |
| | | | 66.8 | 4.07 | 14.3 | 4.16 | 0.062 | |
| HP-S3 | 1.6 | 72 | 59.4 | 3.74 | 13.1 | 5.79 | 0.097 | 66 |
| | | | 59.1 | 3.54 | 13.1 | 5.80 | 0.098 | |
| CP-S1 | 1.6 | 24 | 68.7 | 4.05 | 12.5 | 2.88 | 0.042 | 35 |
| | | | 68.3 | 4.02 | 13.1 | 3.05 | 0.044 | |
| CP-S2 | 1.6 | 40 | 64.3 | 3.90 | 16.1 | 4.27 | 0.066 | 53 |
| | | | 64.3 | 4.05 | 13.9 | 4.33 | 0.067 | |

Nach 24 bis 72 h wurden die Polymere auf Raumtemperatur abgekühlt und in einem großen Überschuss an Methanol durch langsames Eingießen ausgefällt.

Das farblose, faserbildende Polymer wurde abfiltriert, mit Methanol nachgewaschen und 24 h bei 100°C im Umlufttrockenschrank getrocknet. Aus der Elementaranalyse errechnet sich ein Sulfonierungsgrad von 28 bis 66%. Der Sulfonierungsgrad DS lässt sich einfach über die Länge der Reaktionszeit steuern. Weitere Polymereigenschaften sind in Tab. 2 zusammengefasst.

**Tabelle 2: Daten der GPC, IR und TGA Analysen**

| | GPC Daten in DMAc/LiCl bei 50 °C | | | | IR (film) [cm⁻¹ ] | T₁₀ [°C] (10 Gew.% Verlust unter Ar) | Rückstand bei 500°C RW in% |
|---|---|---|---|---|---|---|---|
| | M*w*, [g/mol 10³] | M*w* / M*n* | M*p* [glmol 10³] | [η] [cm³/g] | | | |
| | | | | | 1228 (vₐₛ SO₂) | | |
| HP-S1 | 204 | 2.7 | 96 | - | 1005 (vₛ SO₂) | 400 | 85 |
| | | | | | 625 (C-S) | | |
| | | | | | 1228 (vₐₛ SO₂) | | |
| HP-S2 | - | - | - | - | 1005 (vₛ SO₂) | - | - |
| | | | | | 623 (C-S) | | |
| | | | | | 1228 (vₐₛ SO₂) | | |
| HP-S3 | - | - | - | - | 1005 (vₛ SO₂) | - | - |
| | | | | | 623 (C-S) | | |
| | | | | | 1230 (vₐₛ SO₂) | | |
| CP-S1 | 360 | 5 | 94 | 10.7 | 1005 (vₛ SO₂) | 400 | 84 |
| | | | | | 622 (C-S) | | |
| | | | | | 1229 (vₐₛ SO₂) | | |
| CP-S2 | 670 | 7 | 677 | 13.5 | 1004 (vₛ SO₂) | 350 | 78 |
| | | | | | 623 (C-S) | | |

Das Beispiel 1 zeigt, dass eine Verlängerung der Sulfonierungszeit zu höheren, gleichmäßig steigenden Sulfonierungsgraden führt. Somit können über die Zeit beliebige Sulfonierungsgrade eingestellt werden.

Die NMR-Daten sind in Tabelle 3 dargestellt

**Tabelle 3: NMR Daten der Polymere HP-S1, HP-S3 und CP-S1 in DMSOd6.**

| | ¹H-NMR, δ | ¹³C-NMR, δ |
|---|---|---|
| HP-S1 | 8.0 br s, 7.85-7.60 br s, 7.42 s, 7.25-7.0 m | 139.3, 139.8, 131.0, 130.0, 129.0, 127.5 |
| HP-S3 | 8.27 br s, 7.81 br s, 7.68 m, 7.44 s, 7.20 br s, 7.04 br s | |
| CP-S1 | 8.27 br s, 7.81 br m, 7.69 m, 7.44 s, 7.21 br s, 7.04 br s | |

### Beispiel 2: Bromierung von Homopolymer HP aus Beispiel 1.

Zur Herstellung eines bromierten Polymers wurden 2g Polymer aus Beispiel 1 in 20 ml Chloroform gelöst und mit 60mg Eisenpulver ("Ferrum reductum") unter Rühren auf 60°C erwärmt und bei dieser Temperatur mit 2.33g Brom versetzt. Nach beendeter Zugabe wurde noch 24h bei 60°C weitergerührt. Das bromierte Polymer wurde in einem großen Überschuss Methanol gefällt, abfiltriert und nachgewaschen. Es wurde erneut in Chloroform gelöst und mit verdünnter Natriumhydrogensulfitlösung gewaschen, in Methanol gefällt, abfiltriert und im Umlufttrockenschrank bei 60°C getrocknet. Es wurden 2.66g bromiertes, farbloses Polymer erhalten.
IR (film): 1598 (w, C=C), 1477 (m, C=C), 1226 (s), 1149 (ss, C-F), 1002, 820 (m), 700 (m) cm⁻¹.
Elementaranalyse: gef.: C 54.60, 54.90; H 2.59, 2.75; Br 22.1, 22.1; F 12.4, 12.4.

Aus der Elementaranalyse errechnet sich eine durchschnittliche Bromierung von 1.1 Atom Br pro Monomereinheit.

### Beispiel 3: Bromierung von Copolymer CP aus Beispiel 1.

Wie in Beispiel 2 wurde ein Copolymer nach gleicher Vorschrift bromiert. Es wurden: 1.0g Copolymer, 30mg Eisenpulver, 10ml Chloroform, 1.5g Brom eingesetzt. Ausbeute: 1.45g farbloses Polymer
IR (film): 1598 (m, C=C), 1465 (s, C=C), 1228 (ss), 1155 (ss, C-F), 1004 (m), 821 (s), 701(s) cm⁻¹
1H-NMR (CDCl₃, TMS, ppm): δ = 7.8 br s, 7.7 br s, 7.6 br s, 7.05-7.5 m, (aromatische Protonen).
Elementaranalyse: gef.: C 50.30, 50.30; H 3.97, 4.18; Br 32.9, 32.9; F 12.2, 12.2.

### Beispiel 4: Phosphonierung des bromierten Homopolymers aus Beispiel 2.

1,406 g Homopolymer wurde unter Stickstoffatmosphäre in 5 ml Dichlorbenzol (DCB), 2 ml HP(O)(OEt)₂, 0,5 ml Et₃N gelöst und bis 90°C erhitzt. 30 mg Tris(dibenzylideneaceton)dipalladium(0)-chroroform-addukt in 5 ml DCB und weitere 2 ml HP(O)(OEt)₂ und 0,5 ml Et₃N wurden zu dieser Lösung gegeben.

Es wurde 48 Stunden bei 90°C gerührt. Nach Zugabe einer neuen Portion des Katalysators wurde die Temperatur auf 120°C erhöht und weitere 72 Stunden gerührt. Die Reaktionsmischung wurde abgekühlt, filtriert und in MeOH gefällt. Das phosphonierte Produkt wurde abfiltriert und im Umlufttrockenschrank getrocknet. Ausbeute: 1,22 g.
IR (film): 1230 (s, P=O), 1023 (s, POC) cm⁻¹.
³¹P: δ = 2.58 ppm. ¹H-NMR DMSO-d₆, TMS : δ = 7.1-7.9 ppm (Ar-H, 12H, m), 3.7-4.0 (OCH₂-CH₃, 4H, m), 1.1-1.4 (OCH₂-CH₃, 6H, m). ¹³C-NMR DMSO-d₆, TMS : δ = 139.33, 130.47, 129.85, 129.33, 129.17, 128.33, 128.17, 127.66, 126.74, 126.57, 62.31, 62.14, 52.47, 15.94.

### Beispiel 5: Phosphonierung eines bromierten Copolymers aus Beispiel 3

Nach der Vorschrift von Beispiel 4 wurden 0.733 g bromiertes Copolymer ungesetzt. Es wurden 0.396 g phosphoniertes Copolymer erhalten.
IR (film): 1233 (s, P=O), 1023 (s, POC) cm⁻¹
1 H NMR (CDCl₃, TMS, ppm): δ = 7.2-7.8 (13H, aromatische Protonen) m,
3.8-4.2 (4H, OCH₂CH₃) m, 1.0-1.2 (6H, OCH₂CH₃) m.
Elementaranalyse: gef.: C 56.60, 56.70; H 5.26, 5.29; Br 5.42, 5.58; F 8.26, 8.49; P 7.70, 6.7.

### Beispiel 6: Leitfähigkeitsmessung durch Impedanzspektroskopie

Die Leitfähigkeitsmessung wurde nach einer von Alberti beschriebenen Methode durchgeführt (G. Alberti, M. Casciola, L. Massinelli, B. Bauer, J. Membrane Science 185 (2001) 73-81). Membranen mit 12 mm Durchmesser wurden zwischen zwei Gasdiffusionselektroden (E-TEK) mit einem Durchmesser von 8 mm gelegt und durch poröse Edelstahlzylinder zusammengepresst. Zur Messung wurde ein Impedanzspektrometer (Zahner IM6) im Frequenzbereich 1 kHz bis 1 MHz bei einer Amplitude < 100 mV verwendet. Die Impedanzdaten wurden um den Anteil des Widerstandes der Zelle ohne Membran korrigiert.

Für die Messung wurden jeweils sechs Folien zusammengelegt, um einen ausreichend hohen Widerstand der Membranen im Vergleich zur Zelle zu gewährleisten. Der erhaltene Widerstandswert wurde durch die gesamte Dicke des Membranstacks geteilt, wobei der Durchtrittswiderstand zwischen den Membranen wurde nicht berücksichtigt. Zur Messung wurden die Membranen in entionisiertem Wasser behandelt. Die Leitfähigkeitsmessungen durch die Membranen bei einem Feuchtigkeitswert von 100% wurde von 50°C bis 100°C gemessen. Die Temperatur wurde dann in mehreren Stufen bis zu 50°C reduziert. Die Leitfähigkeit steigt deutlich mit dem Sulfonierungsgrad an. Die besten Werte wurden für einen Sulfonierungsgrad von 66% erreicht.

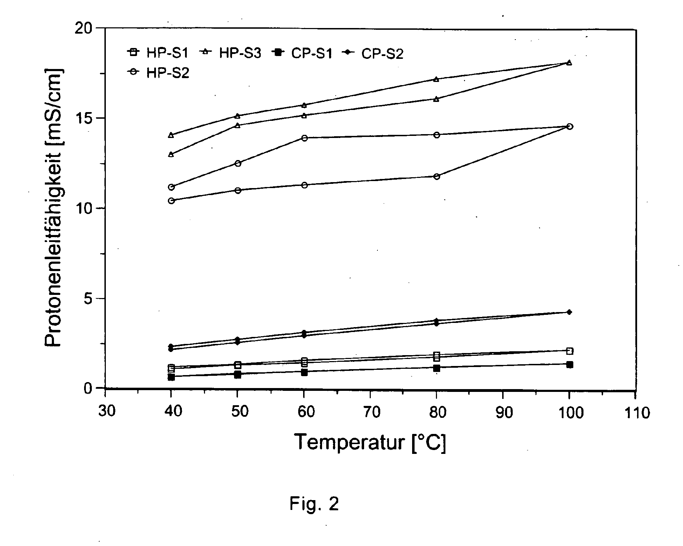

In Fig. 2 ist die Protonenleitfähigkeit der unterschiedlich sulfonierten Polymere aus Beispiel 1 in Abhängigkeit von Sulfonierungsgrad und Struktur dargestellt. Hierbei sind die gemessenen Protonenleitfähigkeitswerte aufgetragen. Die offenen Symbole stehen für die Homopolymere HP-S1 bis HP-S3 (Beispiel 1) mit ansteigendem Sulfonierungsgrad von 28, 45 und 66%. Es ist eine deutliche Zunahme der Leitfähigkeit zu beobachten.

Das am höchsten sulfonierte Homopolymer HP-S3 mit einem Sulfonierungsgrad DS 66% hat eine sehr gute mechanische Festigkeit im mit Wasser gequollenen Zustand. Daraus kann geschlossen werden, dass die durch längere Reaktionszeit erhältlichen Polymere mit höheren Sulfonierungsgraden noch eine wesentlich bessere Leitfähigkeit zeigen.

Aus Fig. 2 geht weiter deutlich hervor, dass die Copolymere CP-S1, CP-S2 mit räumlich weiter voneinander entfernten Sulfonsäuregruppen und somit ungleichmäßigerer Verteilung bei gleichem Sulfonierungsgrad eine wesentlich geringere Leitfähigkeit zeigen. Diese Werte sind in Tabelle 4 gezeigt.

**Tabelle 4. Vergleich der Protonenleitfähigkeit bei 100°C von Homopolymer zu Copolymer**

| | Sulfonierungsgrad [%] | lonenaustauschkapazität (IEC), [mequiv/g] | Protonenleitfähigkeit [mS/cm] |
|---|---|---|---|
| Homopolymer | | | |
| HP-S1 | 28 | 0.84 | 2.2 |
| HP-S2 | 45 | 1.30 | 14.7 |
| HP-S3 | 66 | 1.82 | 18.2 |
| Copolymer | | | |
| CP-S1 | 35 | 0.93 | 1.5 |
| CP-S4 | 53 | 1.34 | 4.3 |

### Beispiel 7: Synthese von sulfoniertem 2,2,2-Trifluoracetophenon

17.4 g (0.1 mol) 2,2,2-Trifluoracetophenon wurden in 50 ml trockenem Chloroform gelöst und unter Rühren und Eisbadkühlung 30 Minuten mit 24.7 g (0.2 mol SO₃) 65% Oleum versetzt. Es wurde anschließend 4 h unter Rühren am Rückfluss auf 55°C erwärmt und das Reaktionsgemisch nach Abkühlen auf Raumtemperatur auf ein Eis/Wasser-Gemisch gegossen.

Mit Natriumhydrogencarbonat wurde auf der pH-Wert auf 8 eingestellt und die organische Phase abgetrennt. Die wässrige Phase wurde zum Rückstand abgezogen und das Produkt mit Ethanol mehrmals extrahiert (15.7 g, 57% Ausbeute Natriumsulfonat).

¹³C-NMR (D₆-DMSO): 196.0 ppm (C=O), 181.4 ppm (C-F), 158.4 ppm (Ar-S), 138.2, 136.7, 135.1, 130.3 ppm (Ar).

### Beispiel 8: Polymerisation von sulfoniertem 2,2,2-Trifluoracetophenon

Zu einer eisgekühlten Mischung von 2.79 g (10 mmol) sulfoniertem 2,2,2-Trifluoracetophenon; 1.56 g (10 mmol) Biphenyl in 10 ml Dichlormethan wurden unter starkem Rühren langsam 10 ml Trifluormethansulfonsäure zugegeben. Nach Entfernen des Eisbades wurde die Polymerisationsmischung drei Tage lang bei Raumtemperatur gerührt. Dabei verfestigte sich der Reaktionsansatz und verfärbte sich dunkel. Mit Methanol wurden Lösemittel und Trifluormethansulfonsäure extrahiert und quantitativ ein dunkel verfärbtes Polymer erhalten.

### Beispiel 9: Hydrolyse von phosphoniertem Polymer oder Copolymer aus Beispielen 4 und 5

Polymer (0.6 g, aus Beispiel 4) oder Copolymer wurden in konzentrierter Bromwasserstoffsäure suspendiert und bei 70°C 48 h lang gerührt. Nach dem Abkühlen wurde auf Eiswasser gegossen, abfiltriert und mit Wasser neutral gewaschen. Es wurden 0.525g Homopolymer mit freien Phosphongruppen erhalten. Das Homopolymer ist in DMSO, NMP löslich und bildet flexible, in Wasser wenig quellende Filme.

### Daten hydrolysiertes Homopolymer

³¹P: δ = 13.99 ppm. ¹H-NMR DMSO-d₆, TMS : δ = 7.1-8.0 ppm (m). ¹³C-NMR DMSO-d₆, TMS : δ = 143.58, 141.06, 138.76, 137.97, 131.99, 131.28, 130.17, 129.53, 128.67, 126.92, 64.55, 64.36.

### Beispiel 10: Protonenleitfähigkeit von hydrolysiertem Homopolymer nach Beispiel 9

Wie in Beispiel 6 beschrieben wurde von einem Film aus hydrolysiertem Homopolymer nach Beispiel 9 die Leitfähigkeit mittels Impedanzspektroskopie gemessen. Es wurden 2 aufeinanderfolgende Messungen im Temperaturbereich von 60 bis 150°C durchgeführt.

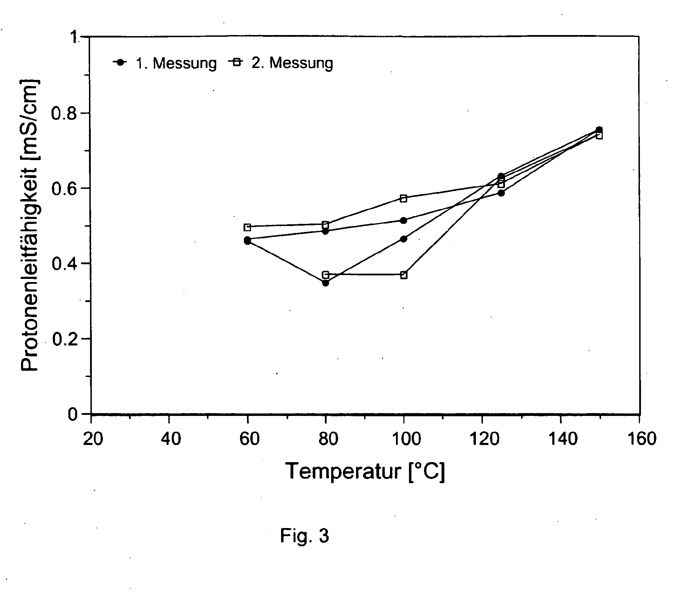

Die Daten sind in Fig. 3 dargestellt und zeigen eine gute Reproduzierbarkeit und Stabilität der Membran bei hohen Werten der Protonenleitfähigkeit für phosphonierte Polymere.

## Patentansprüche

1. Polymerelektrolytmembran, insbesondere einer Brennstoffzelle, aus einem Membranpolymer, **dadurch gekennzeichnet, dass** das Membranpolymer, insbesondere als Homopolymer, aus aromatischen Polyarylenen hergestellt ist, wobei an die Polyarylengruppen protonenleitende funktionelle Gruppen gebunden sind, wobei die aromatischen Polyarylene als Monomereinheit eine der folgenden Strukturen aufweisen: 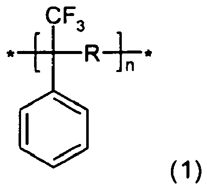 oder 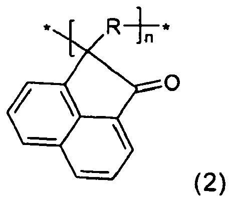 oder 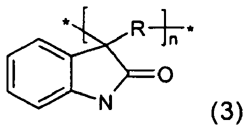 oder 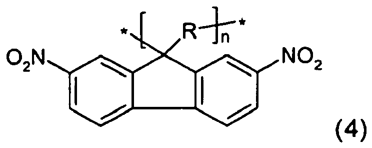 und wobei die Reste R nach Art der Strukturen 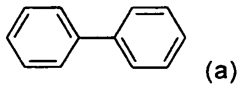 oder 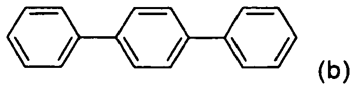 oder 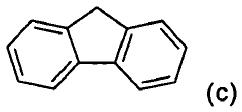 oder 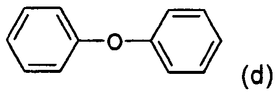 oder 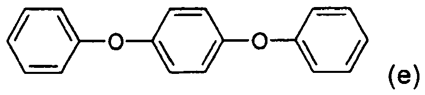 oder 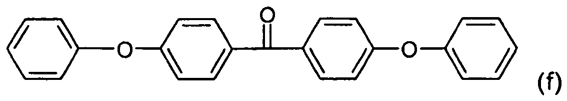 aufgebaut sind.

2. Polymerelektrolytmembran nach Anspruch 1, **dadurch gekennzeichnet, dass** die protonenleitenden funktionellen Gruppen im Wesentlichen gleichmäßig verteilt sind.

3. Polymerelektrolytmembran nach Anspruch 1 oder 2, **dadurch gekennzeichnet, dass** die protonenleitenden funktionellen Gruppen als Phosphonsäuregruppen oder Sulfonsäuregruppen ausgebildet sind.

4. Polymerelektrolytmembran nach einem der Ansprüche 1 bis 3, **dadurch gekennzeichnet, dass** die Polymerelektrolytmembran gemäß dem folgenden Schema 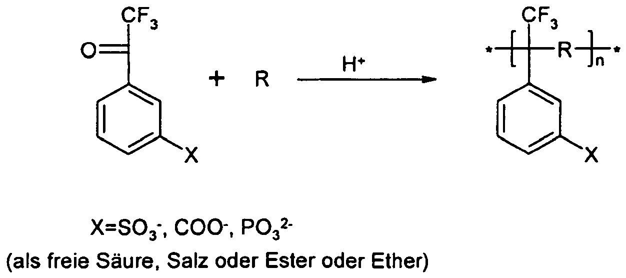 erhältlich ist.

5. Verwendung einer Polymerelektrolytmembran nach einem der Ansprüche 1 bis 4 in einer Brennstoffzelle.

## Claims

1. A polymer electrolyte membrane, particularly for a fuel cell, comprising a membrane polymer, **characterised in that** the membrane polymer is produced, particularly in the form of a homopolymer, from aromatic polyarylenes, wherein proton conducting functional groups are bonded to the polyarylene groups, wherein the aromatic polyarylenes exhibit one of the following structures as a monomer unit: 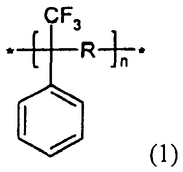 or 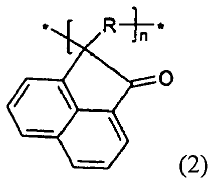 or 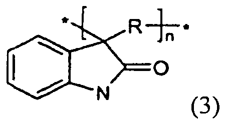 or 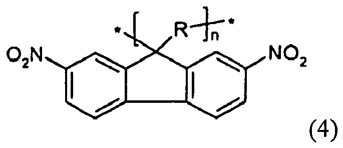 and wherein the remainders are composed in the manner of the structures 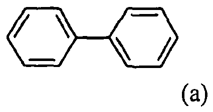 or 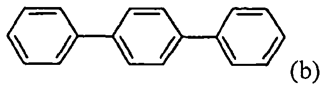 or 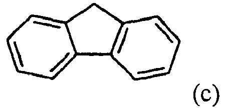 or 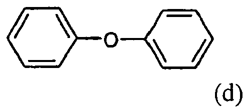 or 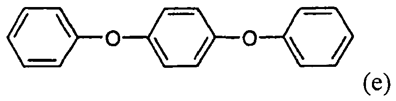 or

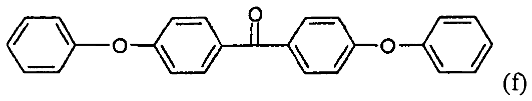

2. A polymer electrolyte membrane as claimed in claim 1, **characterised in that** the proton conducting functional groups are substantially uniformly distributed.

3. A polymer electrolyte membrane as claimed in claim 1 or 2, **characterised in that** the proton conducting functional groups are constituted as phosphonic acid groups or sulphonic acid groups.

4. A polymer electrolyte membrane as claimed in one of claims 1 to 3, **characterised in that** the polymer electrolyte membrane is obtainable in accordance with the following formula

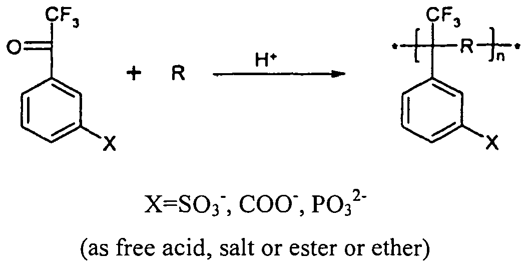

5. Use of a polymer electrolyte membrane as claimed in one of claims 1 to 4 in a fuel cell.

## Revendications

1. Membrane électrolyte polymère, en particulier d'une pile à combustible, constituée d'un polymère pour membrane, **caractérisée en ce que** le polymère pour membrane, en particulier sous forme d'un homopolymère, est fabriqué à partir de polyarylènes aromatiques, des groupes fonctionnels conducteurs de protons étant liés aux groupes polyarylènes, les polyarylènes aromatiques comportant en tant que motif monomère l'une des structures suivantes : 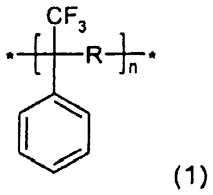 ou 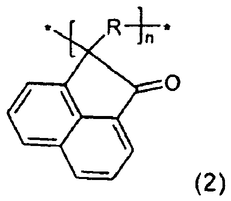 ou 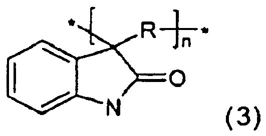 ou 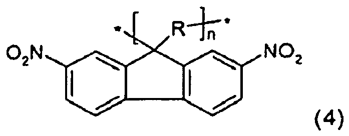 et les radicaux R étant constitués sur le modèle des structures 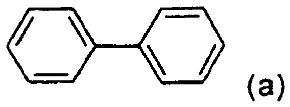 ou 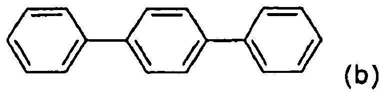 ou 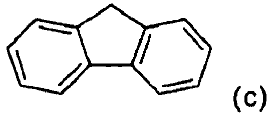 ou 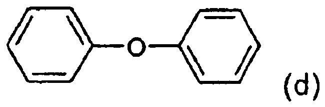 ou 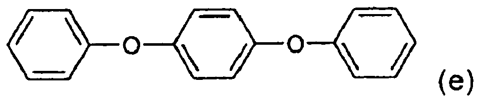 ou

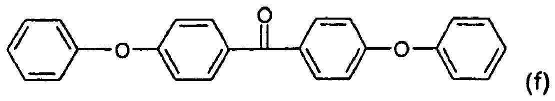

2. Membrane électrolyte polymère selon la revendication 1, **caractérisée en ce que** les groupes fonctionnels conducteurs de protons sont pour l'essentiel répartis uniformément.

3. Membrane électrolyte polymère selon la revendication 1 ou 2, **caractérisée en ce que** les groupes fonctionnels conducteurs de protons sont constitués sous forme de groupes acide phosphonique ou de groupes acide sulfonique.

4. Membrane électrolyte polymère selon l'une des revendications 1 à 3, **caractérisée en ce que** la membrane électrolyte polymère peut être obtenue selon le schéma suivant :

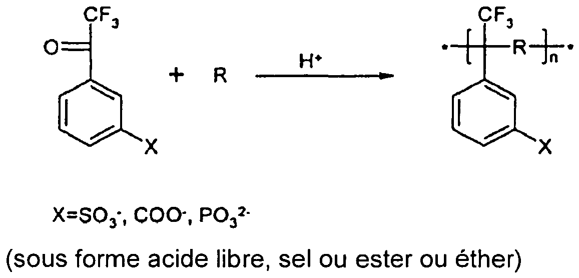

5. Utilisation d'une membrane électrolyte polymère selon l'une des revendications 1 à 4 dans une pile à combustible.
